# EUROPÄISCHE PATENTSCHRIFT

(11) **EP 3 708 426 B1**
(45) Veröffentlichungstag und Bekanntmachung des Hinweises auf die Patenterteilung: **28.06.2023**
(21) Anmeldenummer: 19161811.5
(22) Anmeldetag: 11.03.2019
(51) Int. Cl.: B60P 7/15, B60P 1/64, B60P 7/00

(54) **LADUNGSSICHERUNGSBALKEN UND ZUGEHÖRIGES VERFAHREN**
LOAD SECURING BAR AND ASSOCIATED METHOD
BARRE DE SÉCURISATION DE CHARGE ET PROCÉDÉ ASSOCIÉ

(43) Veröffentlichungstag der Anmeldung: 16.09.2020
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 3 098 113
- EP-A1- 3 184 361
- EP-B2- 1 291 239
- DE-A1-102013 101 363
- US-A- 3 130 690

## Beschreibung

### Technisches Gebiet

Die vorliegende Erfindung betrifft einen Ladungssicherungsbalken sowie ein Verfahren zum Sichern von Ladungstransportmitteln, die mindestens eine Bodenauflageleiste aufweisen.

### Technologischer Hintergrund

Heutzutage werden mit Nutzfahrzeugen vielfältige Arten von Ladung transportiert. Auf Nutzfahrzeugen müssen diese Ladegüter gegen Verrutschen auf dem Ladeboden gesichert sein. Hierzu sind eine Vielzahl von Ladungssicherungen bekannt. Insbesondere bei der Sicherung von Ladungstransportmitteln, die eine oder mehrere auf dem Ladeboden aufliegende Bodenleisten aufweisen, wie z.B. Transportpaletten, Gitterboxen, Gasflaschen-Transportpaletten, stellt sich das Problem, dass diese möglichst unverrückbar auf dem Ladeboden festgezurrt oder formschlüssig gehalten werden müssen.

Aus der EP 2 687 404 B1 ist eine Anordnung zur Ladungssicherung auf Nutzfahrzeugen bekannt, welche zumindest zwei quer zur Fahrtrichtung ausgerichtete Balken aufweist, die jeweils über Befestigungsmittel mit seitlich an den Längsaußenseitenkanten der Ladefläche des Nutzfahrzeugs fest vorgesehenen, mit Löchern versehenen Befestigungsschienen verbindbar und in Bezug zur Fahrzeuglängsrichtung in unterschiedlichen Positionen an den Befestigungsschienen arretierbar sind. Die quer zur Fahrtrichtung ausgerichteten Balken sind über ihre Länge verteilt mit Lochaufnahmen zur Halterung von den eigentlichen Ladungssicherungselementen wie Spanngurte oder dergleichen versehen. In ihrer mit den Befestigungsschienen verbundenen arretierten Stellung liegen diese zumindest bereichsweise auf der Ladefläche auf und ihre Befestigungsmittel greifen die Längsaußenkante der Ladefläche übergreifend in die Löcher der Befestigungsschiene ein.

Bei der hier gezeigten Lösung sind die Balken an jeweils einem Ende mit Befestigungsmitteln ausgebildet, die es zwingend notwendig machen, dass der Balken von der einen Seite an die Längsaußenkante herangeführt wird und dann mittels eines Verriegelungshakens auf der anderen Seite durch eine gegenläufige Bewegung in einer Palettenanschlagleiste oder Befestigungsleiste eingehakt wird. Der Balken selbst dient lediglich als Mittel zum Anbringen von Ladungssicherungsmittel wie Spanngurte etc.

Eine dieser Anordnung sehr ähnliche Anordnung zur Sicherung von Ladung auf Lastfahrzeugen ist auch aus der EP 1 291 239 B2 bekannt. Hier sind quer zur Fahrtrichtung ausgerichtete Balken vorgesehen, die sich in Bezug zur Fahrzeuglängsrichtung in nahezu jeder Position an den Längsaußenseiten einer Ladefläche befindlichen Halterungsmittel anbringen lassen und die über ihre Länge verteilt mit Aufnahmelöchern zur Aufnahme von Spannmitteln versehen sind. Dadurch soll die zu sichernde Ladung nach dem Niederzurrverfahren in Fahrzeuglängsrichtung mit Spanngurten oder dergleichen überspannt werden.

Die Befestigungsmittel auf beiden Seiten des Ladungssicherungsbalkens sind allerdings äußerst speziell und machen ein Einführen von beiden Seiten an den Halterungsleisten notwendig. Darüber hinaus sind die Balken selbst wiederum nur als Befestigungspunkt für die Spannmittel vorhanden.

Auch die in der US 5,954,465 A gezeigte Ladungssicherungsanordnung umfasst Balken, die durch spezielle Stecksicherungen oder Schraubhaken an Längsseitenrändern eines Ladebodens fixiert werden. Die Balken dienen hier als formschlüssige Rutschsicherung für sogenannte Coils bzw. Bandstahlrollen.

Aus der DE 10 2013 101 363 A1 ist ein Verfahren zum Betätigen eines Sperrelementes zwischen zwei Sperrorganen bekannt. Das Sperrelement ist insbesondere ein Spriegel, der zwischen zwei Sperrbalken oder Sperrschienen eingebracht wird. Dieses Dokument offenbart den Oberbegriff des Anspruchs 1.

Die EP 1 291 239 B2 zeigt eine Anordnung zur Sicherung von Ladung. Hier werden Balken quer zur Fahrtrichtung über voneinander unabhängige Befestigungsmittel mit Halterungsmitteln verbunden. Die Halterungsmittel sind als Zurrlochleisten ausgebildet.

In US 3,130,690 A ist ein Ladungssicherungssystem offenbart, das aus mehreren speziell geformten Längsschienen mit Löchern und sich zwischen zwei Längsschienen erstreckenden Ladungssicherungsbalken besteht. Die Ladungssicherungsbalken weisen an ihren jeweiligen Endstücken federvorgespannte Eingriffsstift auf, die in ein Loch in der Längsschiene eingreifen. Der Ladungssicherungsbalken dient als Anlage für Güter in verschiedenen Höhen des Laderaumes.

### Darstellung der Erfindung

Das der Erfindung zugrunde liegende technische Problem besteht darin, eine einfach handzuhabende, kostengünstige Ladungssicherungsmöglichkeit für Ladungstransportmittel, die eine oder mehrere Bodenauflageleisten aufweisen, wie z.B. Transportpaletten, zu schaffen, die es ermöglicht, die Bodenauflageleiste zumindest reibschlüssig gegen einen Ladeboden zu pressen.

Dieses technische Problem wird durch einen Ladungssicherungsbalken gelöst, der ein längliches Balkenstück umfasst, das einen ersten Endbereich und einen dem ersten Endbereich gegenüberliegenden zweiten Endbereich aufweist. Eine Einsteckrichtung ist von dem ersten Bereich in Richtung des zweiten Bereichs definiert. Eine Verriegelungsvorrichtung ist an dem ersten Endbereich des Balkenstücks vorhanden und erlaubt ein werkzeugloses Ineingriffbringen eines Verriegelungshakens mit einer Öffnung am Bereich eines Seitenlängsrandes eines Ladebodens. Die Verriegelungsvorrichtung umfasst einen beweglich gelagerten Handhebel, der mit einem beweglich gelagerten Verriegelungshaken mechanisch gekoppelt ist, so dass durch Bewegen des Handhebels der Verriegelungshaken in eine Einhaköffnung eines Fahrzeugaufbaus einhakbar ist- An dem zweiten Endbereich des Balkenstücks ist eine Einsteckzunge starr ausgebildet und durch Bewegen des Ladungssicherungsbalkens in Einsteckrichtung in eine Einstecköffnung eines Fahrzeugaufbaus einschiebbar.

Erstmals wird somit die Möglichkeit geschaffen, einen Ladungssicherungsbalken über die ein oder mehreren Bodenauflageleisten des Ladungstransportmittels zu schieben und dessen Einsteckzunge in am gegenüberliegenden Ladebodenseitenrand befindliche Einstecköffnung eingreifen zu lassen, also einzuschieben, ohne dass aufwändige Mehrfachbewegungen mit dem Ladungssicherungsbalken notwendig sind. Sodann muss nur die Verriegelungsvorrichtung betätigt werden, um mittels des Ladungssicherungsbalkens das Ladungstransportmittel nach unten gegen den Ladeboden niederzudrücken. Folglich ist es erstmals möglich, mittels eines erfindungsgemäßen Ladungssicherungsbalkens das Ladungstransportmittel reibschlüssig und vorzugsweise zusätzlich auch formschlüssig am Ladeboden zu fixieren, indem der Verriegelungshaken der Verriegelungsvorrichtung in eine passende Einhaköffnung am gegenüberliegenden Rand des Ladebodens eingreift.

Eine solche Fixierung ist beispielsweise durch einen Bediener von einem Ladebodenseitenrand ohne Öffnung der gegenüberliegenden Seitenplane bzw. einer Laderaumabdeckung durchführbar.

In einer beispielhaften Ausführungsform der vorliegenden Erfindung ist vorzugsweise die Einsteckzunge linear beweglich innerhalb des Endbereichs des Ladungssicherungsbalkens ausgebildet und kann von einem Bediener bei Bedarf herausgeholt und in eine Einstecköffnung eingeführt werden. Die Einsteckzunge ist hierfür vorzugsweise federbelastet im Endbereich beweglich und rastbar gelagert, so dass einmal ein Ruhestellung der Einsteckzunge herbeiführbar ist und durch nochmaliges Drücken gegen die Einsteckzunge diese durch die Feder in eine ausgefahrene Stellung gedrückt wird.

In einer beispielhaften Ausführungsform der vorliegenden Erfindung ist vorzugsweise vorgesehen, dass die Verriegelungsvorrichtung und der zugehörige Verriegelungshaken derart ausgebildet sind, dass in Verriegelungsstellung der Verriegelungsvorrichtung eine Totpunktlagerung des Verriegelungshakens vorliegt. Damit ist auf einfache Art und Weise in der Verriegelungsstellung des Handhebels sichergestellt, dass auch bei während des Fahrbetriebs auftretenden Erschütterungen ein Lösen der Verriegelungsvorrichtung unterbunden ist. Vorzugsweise sind dazu die verschiedenen Anlenk- und Gelenkpunkte der Verriegelungsvorrichtung in üblicher Weise für eine Totpunktlagerung zueinander angeordnet.

Eine beispielhafte Ausführungsform eines Ladungssicherungsbalkens gemäß der vorliegenden Erfindung weist an der Unterseite des länglichen Balkenstücks wenigstens ein Distanzstück auf, das einen definierten Abstand des Balkenstücks zu einer Auflage wie ein Ladeboden festlegt. Damit sind in einfacher Art und Weise verschiedene Ladegüter mittels des Ladungssicherungsbalkens definiert klemmbar. Je nach Dicke der Bodenauflageleiste oder Stegs eines Ladungstransportmittels ist das Distanzstück entsprechend anpassbar. Vorzugsweise ist die Höhe des Distanzstückes variabel und/oder das Distanzstück lösbar und austauschbar an dem länglichen Balkenstück anbringbar, beispielsweise indem es anschraubbar oder ansteckbar. Alternativ ist das Distanzstück auch in Richtung der Längsachse des Ladungssicherungsbalkens in einem oder mehreren Langlöchern verschiebbar gelagert.

Vorzugsweise weist das Auflageelement die Form eines Quaders auf.

Das Distanzstück dient vorzugsweise dazu, eine Ladung in seitlicher Richtung von einem Ladebodenseitenrand zum gegenüberliegenden Ladebodenseitenrand durch Formschluss gegen Verrutschen zu sichern, also als Anschlag, z.B. für den Mittelsteg eines Ladungstransportmittels wie eine Transportpalette.

Bei einer weiteren beispielhaften Ausführungsform eines Ladungssicherungsbalkens gemäß der vorliegenden Erfindung ist die Einsteckzunge im Querschnitt zumindest an einer oder zwei einander gegenüberliegenden Seiten kleiner ausgebildet als der zweite Endbereich. Dadurch wird vorzugsweise eine Anschlagfläche geschaffen, mit der die Einstecktiefe der Einsteckzunge an einem korrespondierenden Gegenstück wie der Palettenanschlagleiste definiert wird. Darüber hinaus kann eine Beschädigung einer Seitenplane eines Fahrzeugaufbaus vermieden werden.

Vorzugsweise ist die Einsteckzunge im Querschnitt rechteckförmig und an dem zweiten Endbereich des Balkenstücks angeformt oder angeschweißt. Vorzugsweise sind alle vier Seiten der Einsteckzunge kleiner ausgebildet als der zweite Endbereich des Balkenstückes, sodass eine umlaufende, sich selbst zentrierende Anschlagfläche um die Einsteckzunge herum gebildet ist.

Bei einer weiteren beispielhaften Ausführungsform eines Ladungssicherungsbalkens steht im Bereich der Verriegelungsvorrichtung wenigstens ein Führungselement über zwei Stirnanschlagselemente mit Stirnanschlagflächen vor. Damit ist eine einfache und effektive Zentrierung in einer passenden Öffnung eines Randanschlagelements wie einer Palettenanschlagleiste möglich.

Vorzugsweise sind zwei Führungselemente vorhanden, zwischen denen die Verriegelungshaken angeordnet sind. Damit ist eine platzsparende, gleichfalls sehr effektive Führung in die Öffnung einer Palettenanschlagleiste oder dergleichen geschaffen.

Indem der Abstand zwischen einer Stirnanschlagfläche im Bereich der Verriegelungsvorrichtung und der Stirnanschlagfläche an der Einsteckzunge unter Berücksichtigung von größeren Toleranzen, z.B. im Bereich von 1-20 mm, einem Abstand zwischen zwei einander gegenüberliegenden Palettenanschlagleisten entspricht, wird eine einfache und für einen Bediener gut handhabe Platzierung des Ladungssicherungsbalkens ermöglich.

Um Anpassungen an unterschiedlich breite Ladeböden bzw. Abständen zwischen zwei Palettenanschlagleisten zu ermöglichen, ist es vorzugsweise möglich, dass das Balkenstück längenveränderlich ausgebildet ist, beispielsweise indem es teleskopartig verlängerbar ist und in bestimmten Abständen fixierbar, verschraubbar oder verrastbar ist. Unter Umständen ist es auch zweckdienlich, eine kontinuierliche Längenveränderung des Balkenstückes und eine Fixierung in beliebiger Länge v Abstandelement

Bei einer weiteren beispielhaften Ausführungsform eines Ladungssicherungsbalkens gemäß der vorliegenden Erfindung ist ein Abstandselement auf den Ladungssicherungsbalken aufsetzbar und mit diesem fixierbar. Hierzu ist das Abstandelement beispielsweise U-förmig ausgebildet und besitzt an einem oder beiden im Bereich des Ladebodens befindlichen Enden Abstandshalter, die mit dem Ladungstransportmittel in Formschluss gelangen können und somit ein Verrutschen relativ zum dem Ladungssicherungsbalken verhindern. Vorzugsweise hat das Abstandelement eine Einstecköffnung, durch die ein Fixierstift in den Ladungssicherungsbalken einsteckeckbar ist.

Gemäß einem weiteren Aspekt der vorliegenden Erfindung ist der Ladungssicherungsbalken derart ausgebildet, dass die starr an dem zweiten Endbereich des Balkenstückes vorhandene Einsteckzunge lösbar, insbesondere steckbar, an dem zweiten Endbereich anbringbar ist. Dadurch kann z.B. eine anders geformte Einsteckzunge für eine bestimme Einsteckzunge-Aufnahmeöffnungsform angebracht werden.

Alternativ ist es auch möglich, die lösbare Einsteckzunge durch eine lösbare, insbesondere steckbare Verriegelungsvorrichtung oder ein anderes Verriegelungselement auszutauschen. Bei letzterem Ausführungsbeispiel ist ein erfindungsgemäßer Ladungssicherungsbalken auch dann verwendbar, wenn keine Palettenanschlagleiste am Seitenlängsrand eines Ladebodens vorhanden ist. Vorzugsweise ist die Steckverbindung mittels Rasthaken, federbelasteter Kugel, Bolzen oder ähnlichem am Balkenendbereich einsteckbar und gleichzeitig gegen unabsichtliches Lösen aus der Steckverbindung gesichert.

Gemäß einem weiteren Aspekt der vorliegenden Erfindung umfasst ein System einen Ladungssicherungsbalken und eine Palettenanschlagleiste, die ein längliches Leistenstück umfasst, in dem wenigstens eine einen geschlossenen Öffnungsrand aufweisende Einstecköffnung für einen Ladungssicherungsbalken der hier offenbarten Bauart vorhanden ist. Die Einstecköffnung befindet sich dabei in einer derartigen Höhe über Befestigungselementen in der Palettenanschlagleiste zum Anbringen derselben an einem Rand eines Ladebodens, dass eine Einsteckzunge eines Ladungssicherungsbalkens der hier offenbarten Ausgestaltung mit dieser Einstecköffnung in Eingriff gelangen kann.

Vorzugsweise weist die Einstecköffnung zumindest an der Oberseite einen geradlinigen Öffnungsrand auf, sodass ein Einfaches und formschlüssiges Eingreifen der Einsteckzunge eines Ladungssicherungsbalkens in die Einstecköffnung möglich ist.

Ein weiterer Aspekt der vorliegenden Erfindung betrifft folglich einen Ladungssicherungsbalken mit einem länglichen Balkenstück, das einen ersten Endbereich und einen dem ersten Endbereich gegenüberliegenden zweiten Endbereich umfasst, einer Verriegelungsvorrichtung an dem ersten Endbereich des Balkenstückes und ein lösbar an dem zweiten Endbereich angebrachter, insbesondere steckbarer Verriegelungshaken.

Noch ein weiterer Aspekt der vorliegenden Erfindung betrifft ein System aus Ladungssicherungsbalken und Palettenanschlagleisten-Aufsteckelement. Das Palettenanschlagleisten-Aufsteckelement hat ein Querstück, das zwei voneinander beabstandete Seitenbereiche umfasst, deren untere Ränder auf einen oberen Rand einer Palettenanschlagleiste aufleg- oder aufsetzbar oder formschlüssig fixierbar sind. so dass eine obere Begrenzung einer Einstecköffnung für eine Einsteckzunge geformt ist. Wenigstens ein Halteteil erstreckt sich von dem Querstück nach unten über die unteren Ränder der Seitenbereiche hinweg derart, dass es mit der Palettenanschlagleiste oder einem Seitenlängsrand eines Ladebodens in Eingriff bringbar ist.

Hiermit kann auf einfache Art und Weise eine vorhandene Palettenanschlagleiste dort erfindungsgemäß nachgerüstet werden, wo ein hier offenbarter Ladungssicherungsbalken zum Sichern von Ladung in Einsatz kommen soll, aber keine Aufnahmeöffnung für eine Einsteckzunge vorhanden ist. Das eine oder die die mehreren Halteteile dienen dabei dazu, dass durch eine Einsteckzunge eingebrachte, nach oben gerichtete Kräfte gegen das Aufsteckelement in die Palettenanschlagleiste oder direkt in den Seitenlängsrand eines Ladebodens geleitet werden können. Das Palettenanschlagleisten-Aufsteckelement dient der individuellen Herstellung einer Öffnung zur formschlüssigen Aufnahme einer Einsteckzunge.

Die Halteteile können beispielsweise am unteren Endbereich so ausgebildet sein, dass sie hakenförmig um einen Seitenlängsrand eines Ladebodens und/oder einer Palettenanschlagleiste greifen. Alternativ kann auch vorgesehen sein, dass sie in bestehende Öffnungen einer Palettenanschlagleiste oder im Seitenlängsrand des Ladebodens eingreifen. Die Halteteile können ebenfalls mit Bolzen, u. a. federbelasteten Bolzen, zur Fixierung der Halteteile in Öffnungen am Seitenlängsrand eines Ladebodens und/oder einer Palettenanschlagleiste.

Gemäß einem weiteren Aspekt der vorliegenden Erfindung ist ein Verfahren zum Sichern eines Ladungstransportmittels wie Gasflaschen-Transportpaletten auf einem Ladeboden eines Fahrzeugaufbaus offenbart. Bei dem erfindungsgemäßen Verfahren wird wenigstens ein Ladungssicherungsbalken der hierin offenbarten Art quer zum Ladeboden über wenigstens eine quer zur Fahrzeuglängsrichtung ausgerichtete Bodenauflageleiste des Ladungstransportmittels solange in Einsteckrichtung geschoben, bis die Einsteckzunge in eine korrespondierende Einstecköffnung einer Palettenanschlagleiste am Ladebodenseitenrand eingreift. Sodann wird die Verriegelungsvorrichtung betätigt, so dass das Verriegelungselement wie z.B. ein Verriegelungshaken in eine Einhaköffnung an einem Ladebodenseitenrand, der der Palettenanschlagleiste gegenüberliegt, eingreift und der Ladungssicherungsbalken die Bodenauflageleiste des Ladungstransportmittels reibschlüssig und vorzugsweise auch formschlüssig auf den Ladeboden niederdrückt.

Vorzugsweise erfolgt das Bewegen des Handhebels der Verriegelungsvorrichtung in eine Totpunktstellung, so dass nur durch aktives Betätigen des Handhebels aus der Totpunklage heraus ein Lösen der Verriegelungsvorrichtung möglich ist.

Der Handhebel der Verriegelungsvorrichtung ist am Ladebodenseitenrand zur Betätigung durch einen außerhalb des Trailers, Aufliegers, Anhängers befindlichen Bediener betätigbar.

Gemäß einem weiteren Aspekt der vorliegenden Erfindung ist Palettenanschlagleisten-Aufsteckelement geschaffen, das ein Querstück mit zwei voneinander beabstandeten Seitenbereiche, deren untere Ränder auf einen oberen Rand einer Palettenanschlagleiste auflegbar sind, so dass eine obere Begrenzung einer Einstecköffnung für eine Einsteckzunge geformt ist, und wenigstens ein Halteteil zur Verriegelung in einer Öffnung einer Palettenanschlagleiste oder einem Ladebodenseitenrand umfasst. Das Halteteil kann ein Stift oder dergleichen oder auch ein hakenförmiger Randbereich sein.

### Kurze Beschreibung der Zeichnungen

Im Folgenden sind beispielhafte Ausführungsformen der vorliegenden Erfindung unter Bezugnahme auf die beigefügten Zeichnungen näher beschrieben und erläutert. Es zeigen:
Fig. 1 eine perspektivische Ansicht auf einen Fahrzeuganhänger mit Gasflaschen-Transportpaletten, die mit Hilfe eines erfindungsgemäßen Ladungssicherungsbalken auf dem Ladeboden fixiert sind,
Fig. 2 ein Detail eines Endbereichs des Ladungssicherungsbalkens von Fig. 1,
Fig. 3 eine weitere perspektivische Ansicht der Darstellung von Fig. 2 von einer anderen Richtung,
Fig. 4 eine perspektivische Ansicht eines gegenüberliegenden Endbereichs mit Einsteckzunge des Ladungssicherungsbalkens der voranstehenden Figuren,
Fig. 5 eine Seitenansicht eines erfindungsgemäßen Ladungssicherungsbalkens,
Fig. 6 eine Verriegelungsvorrichtung an einem Endbereich des Ladungssicherungsbalkens,
Fig. 7 eine weitere perspektivische Ansicht von schräg oben auf einen Ladungssicherungsbalken mit der Verriegelungsvorrichtung,
Fig. 8 eine weitere perspektivische Ansicht eines Ladungssicherungsbalkens in gespannter Position,
Fig. 9 eine perspektivische Ansicht einer Einsteckzunge des Ladungssicherungsbalkens gemäß voranstehenden Ausführungsformen,
Fig. 10 eine perspektivische Ansicht auf einen Ladebodenseitenrand mit Palettenanschlagleiste und aufgestecktem Aufsteckelement,
Fig. 11 eine Seitenansicht des Aufsteckelements von Fig. 11,
Fig. 12 eine Seitenansicht eines weiteren Ausführungsbeispiels eines Aufsteckelementes ähnlich dem, das in Fig. 11 gezeigt ist,
Fig. 13 eine Seitenansicht eines weiteren Ausführungsbeispiels eines Ladungssicherungsbalkens mit auswechselbarer Einsteckzunge.

### Detaillierte Beschreibung verschiedener Ausführungsbeispiele der vorliegenden Erfindung

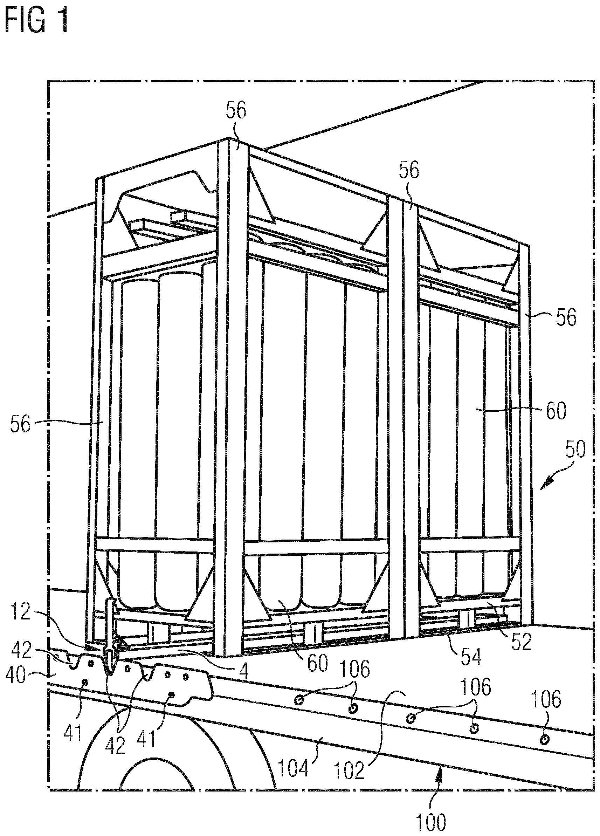

In der Fig. 1, die eine perspektivische Ansicht eines Fahrzeugaufbaus 100 mit darauf stehenden Gasflaschen-Transportpaletten 50 zeigt, sind zwei Gasflaschen-Transportpaletten 50 nebeneinander und quer zur Fahrtrichtung aneinander gestellt. Die beiden Gasflaschen-Transportpaletten 50 sind mittels eines einzigen erfindungsgemäßen Ladungssicherungsbalkens 2 gegen Verrutschen gesichert.

Der Fahrzeugaufbau 100 ist hier Teil eines Lastkraftwagenanhängers mit einem Ladeboden 102. Der Ladeboden 102 weist einen rechten und linken Ladebodenseitenrand 104 auf. Die Richtungsangaben "rechts" und "links" beziehen sich auf die Fahrzeuganhängerfahrtrichtung.

An den beiden Ladebodenseitenrändern 104 sind in Abständen zueinander Einhaköffnungen 106 vorhanden, die später noch eingehender beschrieben werden. Ferner sind an den Ladebodenseitenrändern 104 jeweils Palettenanschlagleisten 40 angebracht. Die Palettenanschlagleisten 40 sind mittels Befestigungselementen 41 wie Schrauben an dem jeweiligen Ladenbodenseitenrand 104 angeschraubt oder verschweißt oder integral ausgebildet. Die Palettenanschlagleisten 40 stehen über den Ladeboden 102 etwas über, sodass ein Ladungstransportmittel, hier eine GasflaschenTransportpalette 50, gegen die Innenseite einer Palettenanschlagleiste 40 verschiebbar ist, aber nicht über den Ladebodenseitenrand 104.

Die Palettenanschlagleisten 40 weisen in diesem Ausführungsbeispiel dreiecksförmige, nach oben offene Öffnungen 42 auf. Ferner sind zwischen den dreiecksförmigen Öffnungen 42 geschlossene Öffnungen vorhanden. Diese geschlossenen Öffnungen können zum Einhaken von Sicherungsmitteln wie Zurrhaken etc. verwendet werden.

Im vorliegenden Fall ist eine nach oben hin offene Dreiecksöffnung einer Palettenanschlagleiste 40 so platziert, dass eine dahinterliegende Einhaköffnung 106 im Ladebodenseitenrand 104 frei zugänglich ist und ein Einhaken eines Hakens des erfindungsgemäßen Ladungssicherungsbalkens 2 erlaubt.

Wie in der Fig. 1 gezeigt, weist eine Gasflaschentransportpalette 50 einen Boden 52 auf, an dessen vier Ecken Pfosten 56 vorhanden sind, die nach oben vorstehen und zwischen denen Gasflaschen 60 platziert werden können. Der Boden 52 hat einen Abstand zu den Enden der Pfosten 56. Die Pfosten 56 sind wiederum zumindest an zwei Stirnseiten durch eine Bodenauflageleiste oder Steg 54 miteinander verbunden. Die Bodenauflageleisten 54 liegen auf dem Ladeboden 102 auf. Die Bodenauflageleisten 54 und der Boden 52 bilden einen Hohlraum 58.

In der Fig. 1 ist grundsätzlich ersichtlich, dass ein erfindungsgemäßer Ladungssicherungsbalken 2 sich von einer Palettenanschlagleiste 40 bis zur gegenüberliegenden, an dem anderen Seitenrand des Ladebodens 102 befindliche Palettenanschlagleiste 40 erstreckt.

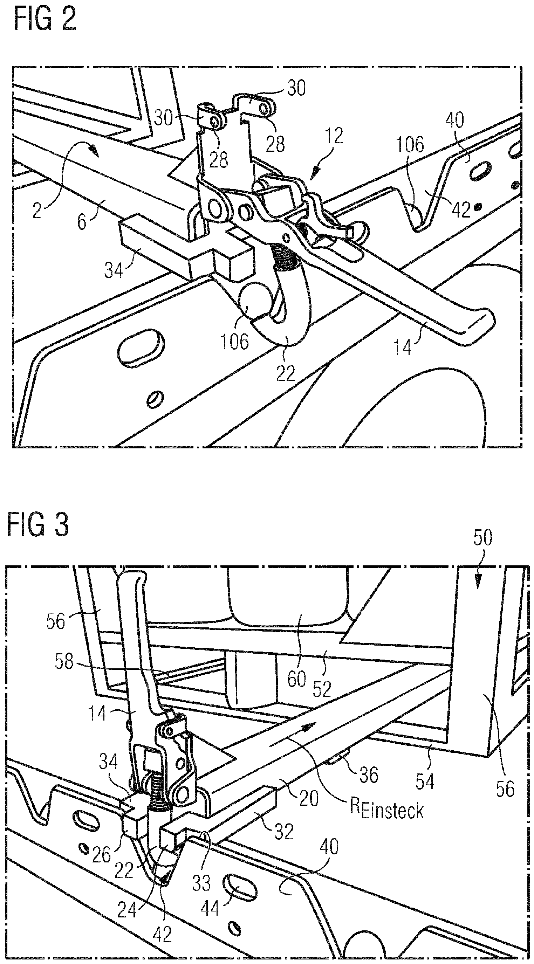

Bei der in der Fig. 2 gezeigten perspektivischen Ansicht des in Fig. 1 vorderen Ladebodenseitenrands 104 ist ersichtlich, dass der Ladungssicherungsbalken 2 aus einem mittleren Balkenstück 4 besteht, an dessen einen Endbereich 6 eine Verriegelungsvorrichtung 12 angeschweißt ist. Selbstverständlich sind auch andere Befestigungsmöglichkeiten denkbar, wie z.B. anschrauben oder stecken mittels Steckverbindung.

Die Verriegelungsvorrichtung 12 umfasst einen Verriegelungshaken 22 und einen Handhebel 14, mit dessen Hilfe der Verriegelungshaken 22 von einer entspannten Position in eine mit der Eingriffsöffnung 106 in Eingriff befindliche Verriegelungsstellung bringbar ist, indem der Handhebel 14 bei der in der Fig. 2 gezeigten Stellung nach oben bewegt wird und dabei der Haken 22 in der Einhaköffnung 106 eingreift.

Wie in Fig. 2 gezeigt, befinden sich zwei Auflageelemente 32, 34 mit der Palettenanschlagleiste 40 am Rand der dreiecksförmigen Öffnung 42 in Eingriff und darüber hinausstehende Führungszapfen 24, 26 sind mit dem Innenrand der dreiecksförmigen Öffnung in Eingriff bzw. mit Spiel darin geführt.

Die gleiche Situation in geschlossener Stellung ist auch in Fig. 3 gezeigt.

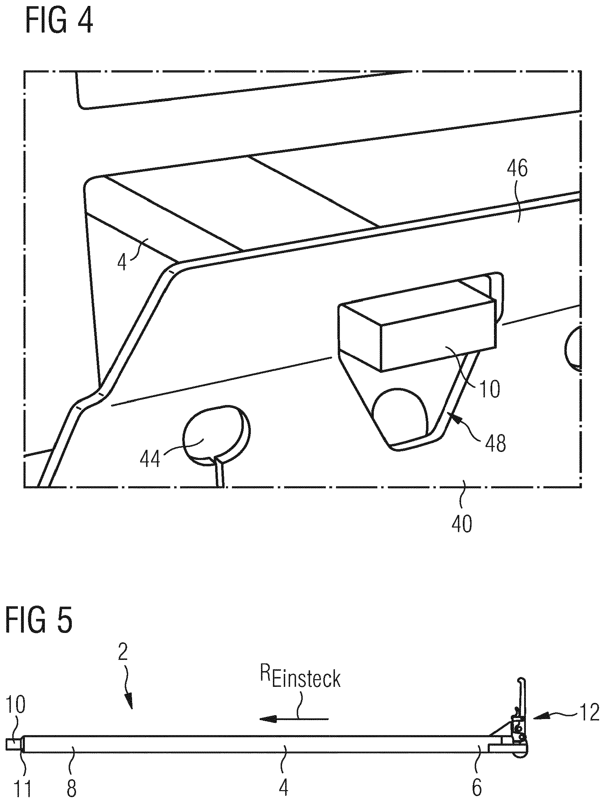

In der Fig. 4 ist das gegenüberliegende Ende des Ladungssicherungsbalkens 2 gezeigt. Dieser zweite Endbereich 8 des Ladungssicherungsbalkens 2 weist eine Einsteckzunge 10 auf, die in einer modifizierten Öffnung der Palettenanschlagleiste 40 eingesteckt ist. Hier ist ein Zusatzblech 46 angeschweißt oder anderweitig angeformt bzw. einstückig ausgebildet (z.B. durch Lasern), um die in Fig. 3 gezeigte offene dreiecksförmige Öffnung 42 zu schließen und eine geschlossene Einstecköffnung 48 zu schaffen, die oberhalb des Ladebodens 102 liegt und ein Ineingriffbringen des Ladungssicherungsbalkens 2 beziehungsweise dessen Einsteckzunge 10 erlaubt.

Die Fig. 5 zeigt eine Seitenansicht eines erfindungsgemäßen Ladungssicherungsbalkens 2. Der Ladungssicherungsbalken 2 umfasst ein längliches mittleres Balkenstück 4 und einen ersten Endbereich 6 sowie ein gegenüberliegenden zweiten Endbereich 8. Am ersten Endbereich 6 ist die Verriegelungsvorrichtung 12 vorhanden, am gegenüberliegenden zweiten Endbereich 8 befindet sich die Einsteckzunge 10.

Wie hier gezeigt, ist die Einsteckrichtung R_{Einsteck} von dem ersten Endbereich 6 hin zu dem zweiten Endbereich 8 gerichtet. Die Einsteckzunge 10 ist hier im Querschnitt quaderförmig ausgebildet und besitzt eine Querschnittsfläche, die kleiner ist als die Querschnittsfläche des Endbereichs 8. Hierdurch sind an allen vier Seiten der Einsteckzunge 10 bevorzugt Anschlagflächen 11 ausgebildet, die mit der Innenseite der Palettenanschlagleiste 40 bzw. der Innenseite der geschlossenen Einstecköffnung 48 in Kontakt gelangen. Die Einsteckzunge 10 selbst kommt unmittelbar durch ein Einschieben in Einsteckrichtung R_{Einsteck} mit der Öffnung 48 in Eingriff und wird in dieser formschlüssigen Eingriffsstellung durch die Verriegelungseinrichtung 12 fixiert.

Wie bereits zuvor erläutert, wird durch das Umlegen des Hebels 14 der Ladungssicherungsbalken 2 gegen die Bodenauflageleisten 54 der Gasflaschen-Transportpaletten 50 nach unten gedrückt und reib- sowie formschlüssig verspannt. Die Distanzstücke 36 verhindern dabei ein Verrutschen zur Seite hin der Gasflaschentransportpaletten 50.

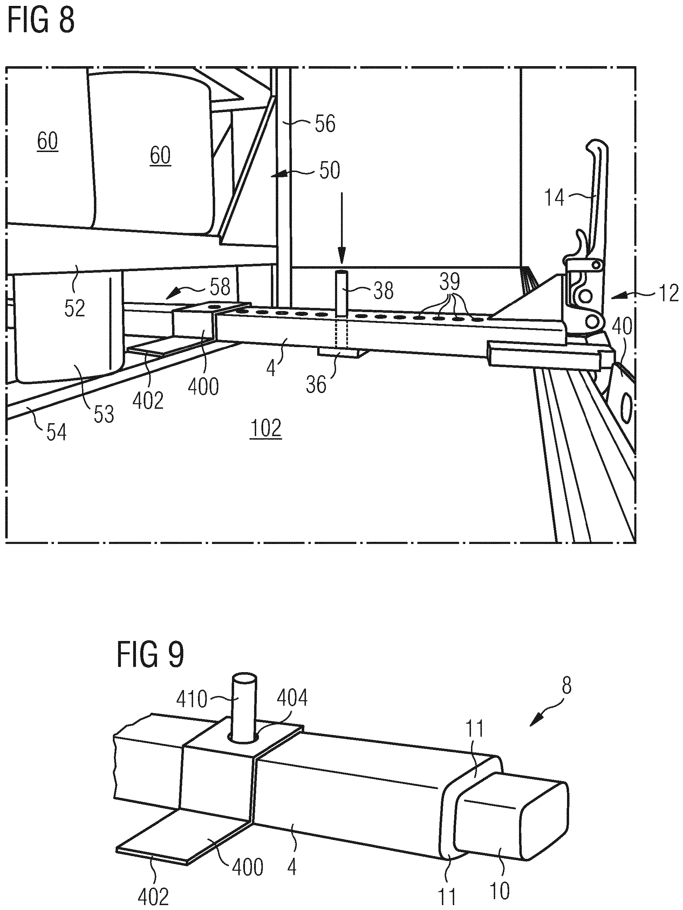

In der Fig. 8 ist eine modifizierte Ausführungsform eines erfindungsgemäßen Ladungssicherungsbalkens 2 gezeigt. Hier ist ein Griffstück 38 vorhanden, das in verschiedene Öffnungen 39 (die beispielsweis durch Längsschlitze miteinander verbunden sind, hier nicht gezeigt) im Ladungssicherungsbalken bzw. dessen mittleren Balkenstück 4 einbringbar ist und damit ein Platzieren der Distanzstücke 36, die mit dem Griffstück 38 verbunden sind, an verschiedenen Stellen ermöglicht, ebenfalls via Kulissenführung realisierbar. Dadurch ist eine individuelle Anpassung der Ladungssicherung an die Breite bzw. Länge des jeweiligen Transportgestells möglich.

In der Fig. 8 und auch insbesondere der Fig. 9 ist auf dem Ladungssicherungsbalken 2 ein Abstandselement 400 auf den aufgesetzt und mit diesem durch einen Stift 410 fixiert. Das Abstandelement 400 ist hier U-förmig ausgebildet und besitzt an einem oder beiden im Bereich des Ladebodens befindlichen Enden Abstandshalter, die mit dem Ladungstransportmittel am Rand 402 in Formschluss gelangen können und somit ein Verrutschen relativ zum dem Ladungssicherungsbalken 2 verhindern. Vorzugsweise hat das Abstandelement 400 eine Einstecköffnung, 404, durch die der Fixierstift 410 in den Ladungssicherungsbalken 2 einsteckbar ist.

Die Fig. 9 zeigt insbesondere nochmals die Anschlagflächen 11 an allen vier Seiten der Einsteckzunge 10. Grundsätzlich ist es aber auch möglich, dass nur ein oder zwei Seiten mit Anschlagflächen 11 ausgebildet sind. Auch die Form und Ausgestaltung der Einsteckzunge 10 kann an andere Einhakeinstecköffnungen bzw. -formen angepasst sein.

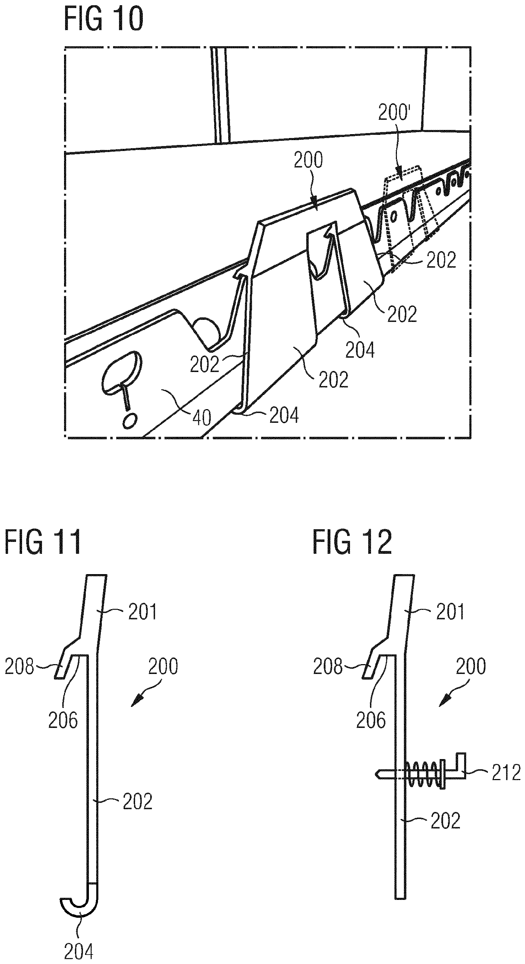

Die Fig. 10 zeigt eine perspektivische Ansicht auf einen Ladebodenseitenrand 104, an dem eine Palettenanschlagleiste 40 angeschraubt ist. Die Palettenanschlagleiste 40 hat hier die gleiche Ausgestaltung wie die, die in der Fig. 1 gezeigt ist. Auf diese Palettenanschlagleiste 40 ist ein separates Aufsteckelement 200 aufgesetzt bzw. fixiert.

Eine Seitenansicht des Aufsteckelementes 200 ist in Fig. 11 gezeigt. Das Aufsteckelement 200 umfasst ein Querstück 201, das hier zwei getrennte Endbereiche umfasst, die jeweils nach unten hin durch Halteteile 202 verlängert sind. Die Halteteile 202 haben jeweils einen hakenförmigen Randbereich 204. Zwischen den beiden Endbereichen ist ein Freiraum geschaffen, der zusammen mit einer nach oben hin offenen Öffnung 42 eine geschlossene Einstecköffnung 48 begrenzt. Eine oder mehrere Nasen 208 bilden mit den Halteteilen 202 eine insbesondere U- oder V-förmige Aufnahme, in der der obere Rand der Palettenanschlagleiste 40 passt

Insbesondere ist aus der Seitenansicht gemäß Fig. 11 ersichtlich, dass die zwei Endbereiche des Querstücks 201 einen Auflagerand 206 aufweisen, der mit einem oberen Randstück einer Palettenanschlagleiste 40 in Anlage kommt, wenn das Aufsteckelement 200 auf die Palettenanschlagleiste 40 aufgesetzt und mit dem hakenförmigen Randbereich 204 eingehakt, oder alternativ, wie in Fig. 12 gezeigt mittels einem Stift 212 fixiert ist.

Die Fig. 12 zeigt eine Seitenansicht eines weiteren Ausführungsbeispiels eines Aufsteckelementes 200 ähnlich dem, das in Fig. 11 gezeigt ist. Im Gegensatz zu dem in Fig. 11 gezeigten Ausführungsbeispiel ist hier kein hakenförmiger Randbereich 204 vorhanden, aber ein Halteteil 212, das durch Eingriff mit einer Öffnung in der Palettenanschlagleiste 40 das Aufsteckelement 200 an der Palettenanschlagleiste 40 lösbar fixiert. Vorzugsweise ist dazu das Halteteil als federbelasteter Stift 212 ausgebildet, der in einer Stellung eine Verriegelung mit der Öffnung leistet und in einer zweiten Stellung ein Abnehmen des Aufsteckelementes 200 von der Palettenanschlagleiste 40 erlaubt.

Wie in Fig. 10 gestrichelt dargestellt, kann das Aufsteckelement 200 an jeder gewünschten Stelle, hier als Aufsteckelement 200' gezeigt, auf die Palettenanschlagleiste 40 aufgesteckt werden.

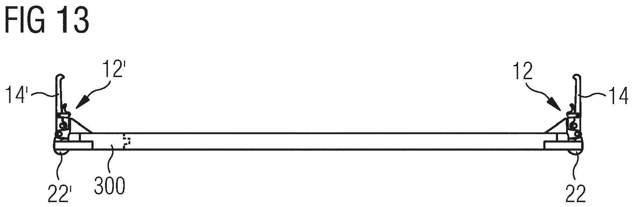

Schließlich zeigt die Fig. 13 eine Seitenansicht eines weiteren Ausführungsbeispiels eines Ladungssicherungsbalkens mit auswechselbarer Einsteckzunge 10'. Dazu ist ein Teil 300 abnehmbar am zweiten Endbereich aufgesteckt und schafft einen Ladungssicherungsbalken mit zwei Verriegelungsvorrichtungen 12, 12' oder einer Verriegelungsvorrichtung 12 und einem steckbaren Haken. Damit ist auch ohne Palettenanschlagleisten 40 ein Ladungssicherungsbalken gemäß der vorliegenden Erfindung zum Sichern einer Ladung in der zuvor erläuterten Weise verwendbar.

### Gewerbliche Anwendbarkeit

Bei der Anwendung eines erfindungsgemäßen Ladungssicherungsbalkens 2 sind ein oder mehrere Gasflaschen-Transportpaletten 50 wie in Fig. 1 auf einem Ladeboden 102 anzuordnen. Ein Bediener nimmt nun einen Ladungssicherungsbalken 2 auf und schiebt diesen von einem Seitenrand 104 über die Bodenauflageleisten 54 durch den Hohlraum 58 in den Gasflaschen-Transportpaletten 50 hindurch bis zum gegenüberliegenden Seitenrand, wobei die Einsteckzunge 10 in die passende Einstecköffnung 48 im gegenüberliegenden Bereich der Palettenanschlagleiste 40 eingeführt ist und die Anschlagflächen 11 an der Innenseite der Palettenanschlagleiste 40 anschlagen können, siehe insbesondere Fig. 4. Dieser Einsatz ist in einfacher Weise durch einen Bediener ohne Öffnung der gegenüberliegenden Laderaumwand durchführbar, was eine optimierte, einseitige Bedienung ermöglicht.

Wenn die Anschlagflächen 11 der Einsteckzunge 10 mit der Innenseite des Anschlagsblechs 46 der Palettenanschlagleiste 40 in Eingriff gelangen und die Nasen 24, 26 in die passende Öffnung an der anderen Palettenanschlagleiste 40 gelangen, erfolgt ein Einhaken des Verriegelungshakens 22 in die entsprechende Öffnung 106 am Ladebodenseitenrand.

Sodann wird der Handhebel 14 hochgedrückt. Dadurch wird automatisch der Ladungssicherungsbalken 2 mit den darunter befindlichen Bodenauflageleisten 54 verspannt und drückt dabei die Bodenauflageleisten 54 der Gasflaschen-Transportpaletten 50 gegen den Ladeboden 102.

Vorzugsweise ist die Verriegelungsvorrichtung 12 so ausgebildet, dass ein Totpunktlagern des Handhebels 14 bzw. des Verriegelungshakens 22 erfolgt und eine sichere Verriegelungsposition eingenommen wird.

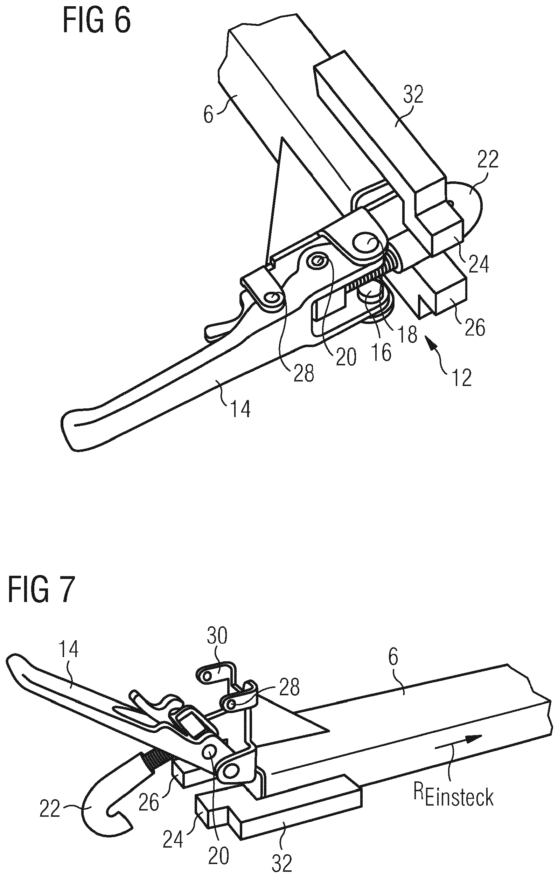

Alternativ ist auch ein Durchstecken eines Sicherungselementes wie ein Sicherungsstift (hier nicht gezeigt) durch entsprechende Öffnungen 28, 30, wie in Fig. 7 dargestellt, möglich, um den Hebel 14 in der Verriegelungsposition zu fixieren.

Zum Lösen wird der Handhebel 14 bevorzugt nach Außen und unten gedrückt. Danach kann der Bediener den Verriegelungshaken 22 außer Eingriff bringen und den Ladungssicherungsbalken 2 im Bereich des ersten Endbereichs 6 hochnehmen und aus dem Hohlraum 58 gegen die Einsteckrichtung R_{Einsteck} herausziehen. Der Handhebel 14 kann zum Lösen weiterhin nach Innen und oben gedrückt werden.

### Allgemeines

Der guten Ordnung halber sei angemerkt, dass hier ein Fahrzeugaufbau sowohl ein Nutzfahrzeugaufbau eines Zugfahrzeuges als auch eines gezogenen Fahrzeuganhängers wie z.B. ein Sattelauflieger sein kann.

Ein solcher Fahrzeugaufbau kann eine durchgehend am Fahrzeugrahmen befestigte mit den Ladungstransportmittelfüßen unter seitlicher Druckbelastung nicht aushebelbare Palettenanschlagleiste von z.B. mindestens 10 mm Höhe und/oder mindestens 2-4 mm Breite aufweisen. Unterbrechungen können u. a. an Rungenanschlagpunkten zulässig bzw. auffindbar sein, soweit diese mit Rungen besetzt sind.

Der Zwischenraum zwischen den an beiden Seiten eines Ladebodenseitenrands befindlichen Palettenanschlagleisten kann insbesondere zwischen 2.000 - 3.000 mm betragen. Vorzugsweise ist die Länge eines erfindungsgemäßen Ladungssicherungsbalkens hieran angepasst oder anpassbar.

Ladungstransportmittel sind hier insbesondere jegliche Art von Paletten oder auch Transportboxen, die Aufnahmehohlräume für Gabelzinken eines Gabelstaplers oder Hubwagens besitzen, also wie eine Palette wenigstens eine Bodenauflageleiste oder -steg umfassen. Insbesondere sind hierin auch alle Transportmittel zu subsumieren, die unterseitig wie eine Europalette ausgebildet sind. Vorzugsweise sind die Transportmittel als sogenannte Vierwegpalette ausgebildet, d. h. sie können von allen vier Seiten mit einem Flurfördergerät wie z.B. mit einem Gabelstapler oder einem Hubwagen aufgenommen und befördert werden.

Begriffe wie "ungefähr", "ca.", "im Wesentlichen" werden hierin verwendet, wenn es um messbare Werte geht. Hiermit soll definiert werden, dass Abweichungen von den Messwerten um ±10% oder weniger, vorzugsweise ±5% oder weniger, und insbesondere ±1% oder weniger und noch weiter bevorzugt ±0.1% oder weniger von der vorliegenden Erfindung mit umfasst sind. Es versteht sich von selbst, dass auch alle Zwischenwerte bestimmter Bereiche, die hierin offenbart sind, als mit offenbart anzusehen sind, auch wenn die Zwischenwerte nicht explizit genannt sind.

## Patentansprüche

1. Ladungssicherungsbalken (2), mit:
- einem länglichen Balkenstück (4), das einen ersten Endbereich (6) und einen dem ersten Endbereich gegenüberliegenden zweiten Endbereich (8) umfasst, wobei eine Einsteckrichtung (R_{Einsteck}) vom ersten Endbereich (6) in Richtung des zweiten Endbereiches (8) definiert ist,
- einer Verriegelungsvorrichtung (12) an dem ersten Endbereich (6) des Balkenstückes (4), und
- einer starr an dem zweiten Endbereich (8) des Balkenstückes (4) vorhandene Einsteckzunge (10), die durch Bewegen des Ladungssicherungsbalkens (2) in Einsteckrichtung (R_{Einsteck}) in eine Einstecköffnung (48) des Fahrzeugaufbaus (100) einschiebbar ist, **dadurch gekennzeichnet, dass**
die Verriegelungsvorrichtung (12) einen beweglich gelagerten Handhebel (14) umfasst, der mit einem beweglich gelagerten Verriegelungshaken (22) mechanisch gekoppelt ist, so dass durch Bewegen des Handhebels (14) das Verriegelungshaken (22) in eine Einhaköffnung (106) eines Fahrzeugaufbaus (100) einhakbar ist und in Verriegelungsstellung der Verriegelungsvorrichtung (12) eine Totpunktlagerung des Verriegelungshakens (22) vorliegt.

2. Ladungssicherungsbalken (2) nach Anspruch 1, bei dem an einer Unterseite des länglichen Balkenstückes (4) wenigstens ein Distanzstück (36) angebracht ist, das einen Abstand des Balkenstückes (4) zu einer Auflage wie ein Ladeboden (102) festlegt.

3. Ladungssicherungsbalken (2) nach einem der voranstehenden Ansprüche, bei dem die Einsteckzunge (10) im Querschnitt zumindest einer Seite oder wenigstens an zwei einander gegenüberliegenden Seiten kleiner ausgebildet ist als der zweite Endbereich (6), um so wenigstens eine Anschlagfläche zu schaffen.

4. Ladungssicherungsbalken (2) nach einem der voranstehenden Ansprüche, bei dem im Bereich der Verriegelungsvorrichtung (12) wenigsten ein Führungselement (24, 26) über zwei Stirnanschlagselemente (34, 36) mit Stirnanschlagflächen (33) vorsteht.

5. Ladungssicherungsbalken (2) nach Anspruch 4, bei dem zwei Führungselemente (24, 26) vorhanden sind, zwischen denen das Verriegelungselement (22) angeordnet ist.

6. Ladungssicherungsbalken (2) nach Anspruch 4 oder 5, bei dem der Abstand zwischen einer Stirnanschlagfläche (33) und der Stirnanschlagfläche (11) an der Einsteckzunge (10) einem Abstand zwischen zwei einander gegenüberliegenden Palettenanschlagleisten (40) des Fahrzeugaufbaus (100) entspricht.

7. Ladungssicherungsbalken (2) nach einem der voranstehenden Ansprüche, bei dem die starr an dem zweiten Endbereich (8) des Balkenstückes (4) vorhandene Einsteckzunge (10) lösbar, insbesondere steckbar, an dem zweiten Endbereich (8) anbringbar ist.

8. Ladungssicherungsbalken (2) nach Anspruch 7, bei dem die lösbare Einsteckzunge (10) durch eine lösbare, insbesondere steckbare, Verriegelungsvorrichtung (12') austauschbar ist.

9. Verfahren zum Sichern eines Ladungstransportmittels (50) wie Gasflaschen-Transportpaletten auf einem Ladeboden (102) eines Fahrzeugaufbaus (100), bei dem:
- wenigstens ein Ladungssicherungsbalken (2) nach einem der voranstehenden Ansprüche quer zum Ladeboden (102) über wenigstens eine Bodenauflageleiste (54) des Ladungstransportmittels (50) solange in Einsteckrichtung (R_{Einsteck}) eingeschoben wird, bis die Einsteckzunge (10) in eine die Einsteckzunge (10) aufnehmende Einstecköffnung (48) einer Palettenanschlagleiste (40) am Ladebodenseitenrand (104) eingreift, und
- der Handhebel (14) der Verriegelungsvorrichtung (12) in eine Totpunktlage bewegt wird,, so dass der Verriegelungshaken (22) in eine Einhaköffnung (106) an einem Ladebodenseitenrand (104), der der Palettenanschlagleiste (40) gegenüberliegt, eingreift und der Ladungssicherungsbalken (2) das Ladungstransportmittel (50) reibschlüssig auf dem Ladeboden (102) niederdrückt.

10. Ladungssicherungsbalken (2) nach einem der Ansprüche 1-8 mit einer Palettenanschlagleiste (40), die ein längliches Leistenstück umfassen, in dem wenigstens eine einen geschlossenen Öffnungsrand aufweisende Einstecköffnung (48) vorhanden ist, die sich in einer derartigen Höhe über Befestigungselementen (41) in der Palettenanschlagleiste (40) zum Anbringen derselben an einem Rand (104) eines Ladebodens (102) befindet, dass die Einsteckzunge (10) des Ladungssicherungsbalkens (2) hiermit in Eingriff gelangen kann.

11. Ladungssicherungsbalken (2) nach Anspruch 10, bei dem die Einstecköffnung (48) der Palettenanschlagleiste (40) an der Oberseite einen geradlinigen Öffnungsrand aufweist.

12. Ladungssicherungsbalken (2) nach einem der Ansprüche 1-8 mit einem Palettenanschlagleisten-Aufsteckelement (200), das umfasst:
i. ein Querstück (201), das zwei voneinander beabstandete Seitenbereiche umfasst, deren untere Ränder (206) auf einen oberen Rand einer Palettenanschlagleiste (40) auflegbar sind, so dass eine obere Begrenzung einer Einstecköffnung (48) für die Einsteckzunge (10) des Ladungssicherungsbalkens (2) geformt ist, und
ii. wenigstens ein Halteteil (202), das sich von dem Querstück (201) nach unten über die unteren Ränder (206) der Seitenbereiche erstreckt und mit der Palettenanschlagleiste (40) oder einem Seitenlängsrand (104) eines Ladebodens in Eingriff bringbar ist.

## Claims

1. A load securing bar (2), comprising:
- an elongated bar piece (4) including a first end portion (6) and a second end portion (8) opposite to the first end portion, wherein an insertion direction (R_{Einsteck}) is defined from the first end portion towards the second end portion (8),
- a locking device (12) at the first end portion (6) of the bar piece (4), and
- an insertion tongue (10) rigidly provided at the second end portion (8) of the bar piece (4), and insertable into an insertion opening (48) of the vehicle superstructure (100) by moving the load securing bar (2) in the insertion direction,
**characterized in that** the locking device (12) includes a movably supported hand lever (14), mechanically coupled to a movably supported locking hook (22), such that, by moving the hand lever (14), the locking hook (22) can be hooked in a hook-in opening (106) of a vehicle superstructure (100) and, in the locked position of the locking device (12), the locking hook (22) is in the dead center position.

2. The load securing bar (2) according to claim 1, wherein at least one spacer (36) is provided at a lower side of the elongate bar piece (4), which spacer defines a distance of the bar piece (4) with respect to a support like a loading floor (102).

3. The load securing bar (2) according to one of the preceding claims, wherein the cross section of the insertion tongue (10) on at least one side or at least two opposing sides is smaller than the second end portion (6) in order to provide at least one stop face.

4. The load securing bar (2) according to one of the preceding claims, wherein, in the area of the locking device (12), at least one guiding member (24, 26) protrudes from two end face stop members (34, 36) having stop surfaces (33).

5. The load securing bar (2) according to claim 4, wherein two guiding members (24, 26) are provided with the locking member (22) arranged between them.

6. The load securing bar (2) according to claim 4 or 5, wherein the distance between a stop surface (33) and the stop surface (11) at the insertion tongue (10) corresponds to a distance between two opposed pallet stop rails (40) of the vehicle superstructure (100).

7. The load securing bar (2) according to any one of the preceding claims, wherein the insertion tongue (10), which is rigidly provided on the second end portion (8) of the bar part (4) is detachably, in particular pluggably, attachable to the second end portion.

8. The load securing bar (2) according to claim 7, wherein the detachable insertion tongue (10) can be replaced by a detachable, in particular pluggable, locking device (12').

9. A method for securing a load transportation means (50), like gas cylinder transport pallets, on a loading floor (102) of a vehicle superstructure (100), wherein
- at least one load securing bar (2) according to one of the preceding claims is inserted in the insertion direction (R_{Einsteck}) transversely relative to the loading floor (102) via at least one floor support bar (54) of the load transportation means (50) until the insertion tongue (10) engages with a pallet stop rail (40) at the lateral edge (104) of the loading floor, and
- the hand lever (14) of the locking device (12) is moved to a dead center position, such that the locking hook (22) engages with a hook-in opening (106) at a lateral edge (104) of the loading floor, which is opposed to the pallet stop rail (40), and the load securing bar (2) presses down the load transportation means (50) to the loading floor by friction.

10. The load securing bar (2) according to any one of claims 1 to 8, comprising
a pallet stop rail (40) including an elongate rail portion, wherein at least one insertion opening (48) with a closed opening edge is provided above fastening members (41) in the pallet stop rail (40) for attaching the same at an edge (104) of a loading floor (102) at such a height that the insertion tongue (10) of the load securing bar (2) can engage with the same.

11. The load securing bar (2) according to claim 10, wherein the insertion opening (48) of the pallet stop rail (40) has a straight opening edge at the upper side.

12. The load securing bar (2) according to any one of claims 1 to 8, comprising a pallet stop rail plug-on member (200) including
i. a cross member (201) including two spaced side portions, the lower edges (206) of which can be supported on an upper edge of a pallet stop rail (40) so as to form an upper boundary of an insertion opening (48) for the insertion tongue (10) of the load securing bar (2), and
ii. at least one holding member (202), extending downward over the lower edges (206) of the lateral portions from the cross member (201), and engageable with the pallet stop rail (40) or a lateral edge (104) of a loading floor.

## Revendications

1. Poutre d'arrimage de cargaison (2), comprenant :
- une pièce de poutre (4) allongée, comprenant une première zone d'extrémité (6) et une deuxième zone d'extrémité (8) opposée à la première zone d'extrémité, dans laquelle une direction d'insertion (R_{Einsteck}) est définie à partir de la première zone d'extrémité (6) dans la direction de la deuxième zone d'extrémité (8),
- un dispositif de verrouillage (12) dans la première zone d'extrémité (6) de la pièce de poutre (4), et
- une languette d'insertion (10) disposée rigidement dans la deuxième zone d'extrémité (8) de la pièce de poutre (4), qui est apte à être insérée dans une ouverture d'insertion (48) de la caisse du véhicule (100) en déplaçant la poutre d'arrimage de cargaison (2) dans la direction d'insertion (R_{Einsteck}),
**caractérisée en ce que**
le dispositif de verrouillage (12) comprend un levier à main (14) monté mobile qui est couplé mécaniquement à un crochet de verrouillage (22) monté mobile, de sorte que le crochet de verrouillage (22) puisse être accroché dans une ouverture d'accrochage (106) d'une caisse du véhicule (100) en déplaçant le levier à main (14), et qu'un positionnement de point mort du crochet de verrouillage (22) se produise dans la position de verrouillage du dispositif de verrouillage (12).

2. Poutre d'arrimage de cargaison (2) selon la revendication 1, dans laquelle au moins une entretoise (36) est montée à une face inférieure de la pièce de poutre (4) allongée, laquelle entretoise définit un espacement de la pièce de poutre (4) par rapport à un support tel qu'un plancher de chargement (102).

3. Poutre d'arrimage de cargaison (2) selon l'une des revendications précédentes, dans laquelle la languette d'insertion (10) est plus petite que la deuxième zone d'extrémité (6) dans une section transversale d'au moins un côté, ou sur au moins deux côtés opposés, afin de créer au moins une surface de butée.

4. Poutre d'arrimage de cargaison (2) selon l'une des revendications précédentes, dans laquelle au moins un élément de guidage (24, 26) fait saillie sur deux éléments de butée avant (34, 36) avec des surfaces de butée avant (33) dans la région du dispositif de verrouillage (12).

5. Poutre d'arrimage de cargaison (2) selon la revendication 4, dans laquelle deux éléments de guidage (24, 26) sont prévus, entre lesquels se trouve l'élément de verrouillage (22).

6. Poutre d'arrimage de cargaison (2) selon la revendication 4 ou 5, dans laquelle la distance entre une surface de butée avant (33) et la surface de butée avant (11) sur la languette d'insertion (10) correspond à une distance entre deux bandes de butée de palette (40) opposées de la caisse du véhicule (100).

7. Poutre d'arrimage de cargaison (2) selon l'une des revendications précédentes, dans laquelle la languette d'insertion (10) disposée rigidement dans la deuxième zone d'extrémité (8) de la pièce de poutre (4) est apte à être fixée de manière amovible, notamment enfichable, dans la deuxième zone d'extrémité (8).

8. Poutre d'arrimage de cargaison (2) selon la revendication 7, dans laquelle la languette d'insertion (10) amovible peut être remplacée par un dispositif de verrouillage (12') amovible, en particulier enfichable.

9. Procédé de fixation d'un moyen de transport de cargaison (50), tel que des palettes de transport de bouteilles de gaz, sur un plancher de chargement (102) d'une caisse du véhicule (100), dans lequel :
- au moins une poutre d'arrimage de cargaison (2) selon l'une des revendications précédentes est enfoncée transversalement par rapport au plancher de chargement (102) au-dessus d'au moins une bande de support au sol (54) du moyen de transport de cargaison (50) dans la direction d'insertion (R_{Eins-teck}) jusqu'à ce que la languette d'insertion (10) s'engage dans une ouverture d'insertion (48) d'une barre d'arrêt de palette (40) recevant la languette d'insertion (10) sur le bord latéral (104) du plancher de chargement, et
- le levier à main (14) du dispositif de verrouillage (12) est déplacé vers une position de point mort, de sorte que le crochet de verrouillage (22) s'engage dans une ouverture d'accrochage (106) sur un bord latéral (104) du plancher de chargement qui est à l'opposé la barre d'arrêt de palette (40), et la poutre d'arrimage de cargaison (2) appuyant le moyen de transport de cargaison (50) vers le bas de manière frictionnelle sur le plancher de chargement (102).

10. Poutre d'arrimage de cargaison (2) selon l'une des revendications 1-8 avec une barre d'arrêt de palette (40), comprenant une section de bande allongée dans laquelle est prévue au moins une ouverture d'insertion (48) ayant une bord d'ouverture fermé, qui est disposée au-dessus d'éléments de fixation (41) dans la barre d'arrêt de palette (40) pour fixer celle-ci à un bord (104) d'un plancher de chargement (102) à une telle hauteur que la languette d'insertion (10) de la poutre d'arrimage de cargaison (2) peut s'y engager.

11. Poutre d'arrimage de cargaison (2) selon la revendication 10, dans laquelle l'ouverture d'insertion (48) de la barre d'arrêt de palette (40) présente un bord d'ouverture rectiligne sur le côté supérieur.

12. Poutre d'arrimage de cargaison (2) selon l'une des revendications 1-8 avec un élément d'emboîtement de bande d'arrêt de palette (200), comprenant :
i. une pièce transversale (201) qui comprend deux zones latérales espacées l'une de l'autre, dont les bords inférieurs (206) peuvent être placés sur un bord supérieur d'une barre d'arrêt de palette (40), de sorte qu'une limite supérieure d'une ouverture d'insertion (48) pour la languette d'insertion (10) de la poutre d'arrimage de cargaison (2) soit formée, et
ii. au moins un élément de retenue (202), qui s'étend vers le bas à partir de la pièce transversale (201) au-delà des bords inférieurs (206) des zones latérales et qui est apte à venir en prise avec la barre d'arrêt de palette (40) ou un bord latéral longitudinal (104) d'un plancher de chargement.
